# EUROPÄISCHE PATENTANMELDUNG

(11) **EP 3 249 027 A1**
(43) Veröffentlichungstag der Anmeldung: **29.11.2017**
(21) Anmeldenummer: 16180640.1
(22) Anmeldetag: 21.07.2016
(51) Int. Cl.: C10G 9/20, B01J 19/24, C10G 9/24, C10G 9/36

(54) **EMISSIONSREDUZIERTES VERFAHREN ZUR HERSTELLUNG VON OLEFINEN**

(30) Priorität: 25.05.2016 DE 102016209172
(71) Anmelder: Linde Aktiengesellschaft, 80331 München (DE)
(72) Erfinder: Mateos, Daniel, 81373 München (DE); Schmidt, Gunther, 82041 Deisenhofen (DE); Penner, Florian, 82538 Geretsried (DE); Fritz, Helmut, 81375 München (DE)
(74) Vertreter: m patent group

(57) **Zusammenfassung**

Die vorliegende Erfindung betrifft ein emissionsreduziertes Verfahren (100) zur Herstellung von Olefinen durch Dampfspalten unter Verwendung eines oder mehrerer Rohrreaktoren (10, 10a-10c). Es ist vorgesehen, dass der Rohrreaktor (10, 10a) oder zumindest einer der Rohrreaktoren (10, 10a-10c) sowohl unter Verwendung von Verbrennungswärme, die durch Verfeuern wenigstens eines Brennstoffs erzeugt wird, als auch unter Verwendung von Elektrowärme, die mittels elektrischer Energie erzeugt wird, beheizt wird.Eine entsprechende Anlage zur emissionsreduzierten Herstellung von Olefinen durch Dampfspalten ist ebenfalls Gegenstand der Erfindung.

## Beschreibung

Die Erfindung betrifft ein emissionsreduziertes Verfahren zur Herstellung von Olefinen und eine entsprechende Anlage gemäß den Oberbegriffen der jeweiligen unabhängigen Patentansprüche.

### Stand der Technik

Verfahren und Vorrichtungen zum Dampfspalten (engl. Steam Cracking) und zur Aufbereitung der hierbei gewonnenen Gasgemische sind aus dem Stand der Technik in unterschiedlichen Ausgestaltungen bekannt. Zu weiteren Details sei auf einschlägige Fachliteratur, beispielsweise den Artikel "Ethylene" in Ullmann's Encyclopedia of Industrial Chemistry, Onlineausgabe, 2009, DOI 10.2002/14356007.a10_045.pub3 oder Falqi, F.: "The Miracle of Petrochemicals. Olefins Industry: An In-Depth Look at Steam-Crackers", Universal-Publishers 2009, ISBN 1-59942-915-2, verwiesen.

In Verfahren und Vorrichtungen zum Dampfspalten werden typischerweise Rohrreaktoren eingesetzt, deren Reaktionsrohre unter Verwendung von Brennern von außen erwärmt werden. Die Reaktionsrohre können unterschiedlich ausgestaltet sein. Beispielsweise können Reaktionsrohre zunächst paarweise parallel geführt und anschließend zu einem gemeinsamen Reaktionsrohr vereinigt werden, oder es können durchgängig parallele Rohre zum Einsatz kommen. Die Dimensionierung der Reaktionsrohre richtet sich unter anderem nach den verwendeten Einsätzen.

In einem entsprechenden Reaktor können eine oder mehrere Brennkammern von typischerweise bis zu 15 m Höhe und 2 bis 3 m Breite vorgesehen sein, in denen wand- und/oder bodenmontierte Brenner angeordnet sind. Eine Brennkammer, durch die auch die Reaktionsrohre verlaufen, definiert eine sogenannte Strahlungszone. Sie steht unter leicht unteratmosphärischem Druck, der durch die zum Abzug der Rauchgase verwendeten Ventilatoren zustande kommt. Die Temperatur in einer Brennkammer beträgt typischerweise 1.000 bis 1.200 °C.

Der oder den Brennkammern, also der oder den Strahlungszonen, sind eine oder mehrere sogenannte Konvektionszonen nachgeordnet, in denen eine Nutzung der Wärme der Rauchgase erfolgt. Das Rauchgas mehrerer Brennkammern kann auch eine gemeinsame Konvektionszone geführt werden. Beispielsweise können in einer Konvektionszone der Einsatz, die den Brennern zugeführte Verbrennungsluft oder Kesselspeisewasser vorgewärmt oder Dampf erzeugt oder überhitzt werden.

Das in der Strahlungszone in den Reaktionsrohren gebildete Spaltgas wird zur Vermeidung von unerwünschten Weiterreaktionen rasch abgekühlt (sogenannter Quench bzw. Primärquench), wozu ein sogenannter Spaltgaskühler zum Einsatz kommt. Das Spaltgas mehrerer Reaktionsrohre kann in einer gemeinsamen Leitung zusammengefasst und in dieser durch einen entsprechenden Spaltgaskühler geführt werden, oder die Reaktionsrohre können getrennt voneinander durch einen als Linearkühler ausgebildeten Spaltgaskühler verlaufen.

Beim Dampfspalten handelt es sich aufgrund der erforderlichen Wärmemengen um das Verfahren der chemischen Industrie, das am meisten Energie verbraucht. 2004 wurden etwa 30% der in der chemischen Industrie verbrauchen Industrie beim Dampfspalten eingesetzt (T. Ren, Energy Efficiency and Innovative Emerging Technologies for Olefin Production, European Conference on Energy Efficiency in IPPC-Installations, 21. bis 22. Oktober 2004, Wien). 2000 wurden beim Dampfspalten bei einer Produktionsmenge von mehr als 150 Mt leichter Olefine durch die Verbrennung fossiler Rohstoffe etwa 3 EJ Primärenergie verbraucht und nahezu 200 Mt Kohlendioxid emittiert (T. Ren et al., Steam cracking and methane to olefins: Energy use, CO2 emissions and production costs, Energy 33, 2008, 817-833).

In den erläuterten Reaktoren wird dabei der überwiegende Anteil, nämlich 65% an Energie eingesetzt. Hier sind 75% der Gesamtexergieverluste zu verzeichnen. Etwa 15 bis 20% werden für die Kühlung, Verdichtung und Fraktionierung des Spaltgases eingesetzt. Der Energieaufwand für das Dampfspalten von Naphtha lässt sich beispielsweise durch verbesserte Materialien zur Verhinderung übermäßiger Verkokung verringern, wobei Energieeinsparungen von bis zu 20% im Bereich der Reaktoren möglich sind (T. Ren, 2004; siehe oben).

Aufgrund der ausgesprochen hohen Kohlendioxidemissionen beim Dampfspalten sind Einsparungen im Hinblick auf die globale Klimaproblematik besonders wünschenswert. Die vorliegende Erfindung stellt sich daher die Aufgabe, Emissionen, insbesondere von Kohlendioxid, beim Dampfspalten zu verringern.

### Offenbarung der Erfindung

Die vorliegende Erfindung schlägt ein emissionsreduziertes Verfahren zur Herstellung von Olefinen und eine entsprechende Anlage mit den Merkmalen der unabhängigen Patentansprüche vor. Ausgestaltungen sind Gegenstand der abhängigen Patentansprüche sowie der nachfolgenden Beschreibung.

Vor der Erläuterung der Merkmale und Vorteile der vorliegenden Erfindung werden deren Grundlagen und die verwendeten Begriffe erläutert.

Gasgemische können im hier verwendeten Sprachgebrauch "überwiegend oder ausschließlich" eine oder mehrere Komponenten enthalten sein, wobei "überwiegend" für einen Gehalt von wenigstens 50%, 75%, 90%, 95%, 99%, 99,5%, 99,9%, 99,99% oder 99,999% auf molarer, Gewichts- oder Volumenbasis stehen kann. Gasgemische können im hier verwendeten Sprachgebrauch ferner "angereichert" oder "abgereichert" an einer oder mehreren Komponenten sein, wobei sich diese Begriffe auf einen Gehalt in einem Ausgangsgasgemisch beziehen, aus das Gasgemisch erhalten wurde. Das Gasgemisch ist "angereichert", wenn es zumindest den 1,1-fachen, 1,5-fachen, 2-fachen, 5-fachen, 10-fachen, 100-fachen oder 1.000-fachen Gehalt, "abgereichert", wenn es höchstens den 0,9-fachen, 0,5-fachen, 0,1-fachen, 0,01-fachen oder 0,001-fachen Gehalt einer Komponente, bezogen auf das Ausgangsgasgemisch enthält. Ist hier kurz von "Wasserstoff" die Rede, sei darunter reiner Wasserstoff verstanden oder ein Gasgemisch, das überwiegend oder ausschließlich Wasserstoff enthält.

Gängige Verfahren zur Fraktionierung von Gasgemischen aus Dampfspaltverfahren umfassen insbesondere die Erzeugung von Fraktionen auf Grundlage der Siedepunkte der enthaltenen Komponenten. In der Fachwelt werden für entsprechende Fraktionen Kurzbezeichnungen verwendet, die die Kohlenstoffanzahl der überwiegend oder ausschließlich enthaltenen Kohlenwasserstoffe angeben. So ist eine "C1-Fraktion" eine Fraktion, die überwiegend oder ausschließlich Methan (jedoch konventionsgemäß unter Umständen auch Wasserstoff, dann auch "C1minus-Fraktion" genannt) enthält. Eine "C2-Fraktion" enthält überwiegend oder ausschließlich Ethan, Ethylen und/oder Acetylen. Eine "C3-Fraktion" enthält überwiegend Propan, Propylen, Methylacetylen und/oder Propadien. Eine "C4-Fraktion" enthält überwiegend oder ausschließlich Butan, Buten, Butadien und/oder Dimethylacetylen. Entsprechendes gilt für die "C5-Fraktion" und die höheren Fraktionen. Mehrere solcher Fraktionen können auch Verfahrens- und/oder bezeichnungsmäßig zusammengefasst werden. Beispielsweise enthält eine "C2plus-Fraktion" überwiegend oder ausschließlich Kohlenwasserstoffe mit zwei und mehr und eine "C2minus-Fraktion" überwiegend oder ausschließlich Kohlenwasserstoffe mit einem oder zwei Kohlenstoffatomen.

### Vorteile der Erfindung

Ein wesentlicher Aspekt der vorliegenden Erfindung ist der Einsatz eines oder mehrerer Rohrreaktoren beim Dampfspalten, der oder die sowohl mit elektrischer Energie, d.h. Elektrowärme, als auch mit Verbrennungswärme beheizt werden. Auf diese Weise lassen sich im Rahmen der vorliegenden Erfindung beträchtliche Emissionsreduzierungen und Flexibilitätsverbesserungen erzielen. Die vorliegende Erfindung kann insbesondere auch ein Verfahren schaffen, bei denen überhaupt keine Kohlendioxidemissionen mehr auftreten, so dass ein sogenanntes "Zero Emission"-Verfahren geschaffen wird.

Ist hier davon die Rede, dass bestimmte Rohrreaktoren "sowohl unter Verwendung von Verbrennungswärme als auch unter Verwendung von Elektrowärme beheizt werden", sei hierunter verstanden, dass der gesamte oder der gesamte zusätzliche Wärmeeintrag, den eines oder mehrere der Reaktionsrohre innerhalb eines entsprechenden Rohrreaktors jeweils erfahren, sowohl auf den Einsatz von Elektrowärme als auch von Verbrennungswärme in dem jeweiligen Reaktor zurückzuführen ist. Werden beispielsweise ein elektrisch beheizter und ein mittels Verbrennungswärme beheizter Reaktor seriell hintereinander angeordnet, kann das dem elektrisch beheizten Reaktor entnommene und dem mittels Verbrennungswärme beheizten Reaktor zugeführte Gas fühlbare Wärme enthalten, die letztlich auf die Beheizung in dem elektrisch beheizten Reaktor, d.h. ebenfalls auf Elektrowärme, zurückzuführen ist. In diesem Fall wird aber keiner der Rohrreaktoren im Sinne der soeben getroffenen Definition "sowohl unter Verwendung von Verbrennungswärme als auch unter Verwendung von Elektrowärme beheizt", denn in dem mittels Verbrennungswärme beheizten Reaktor findet kein bzw. kein Wärmeeintrag statt, der auf den Einsatz von Elektrowärme zurückzuführen wäre. Dort wird allenfalls Restwärme aus dem elektrisch beheizten Reaktor genutzt. Entsprechendes gilt sinngemäß natürlich auch für den umgekehrten Fall, d.h. wenn ein mittels Verbrennungswärme und ein elektrisch beheizter Reaktor seriell angeordnet sind.

Auch eine parallele Anordnung von beispielsweise zwei Rohrreaktoren, von denen einer nur mittels Elektrowärme und einer nur mittels Verbrennungswärme beheizt wird, fällt nicht unter die soeben getroffene Definition, denn hier ist nicht der gesamte oder der gesamte zusätzliche Wärmeeintrag, den eines oder mehrere der Reaktionsrohre innerhalb eines entsprechenden Rohrreaktors jeweils erfahren, sowohl auf den Einsatz von Elektrowärme als auch von Verbrennungswärme in dem jeweiligen Reaktor zurückzuführen. Im Fall entsprechender parallel betriebener Reaktoren existieren nur Reaktionsrohre, die entweder mittels Elektrowärme oder mittels Verbrennungswärme beheizt werden. Diese befinden sich außerdem in unterschiedlichen Rohrreaktoren. Unter einem "Rohrreaktor" werden in diesem Zusammenhang nach außen abgeschlossene Einheiten verstanden, in denen mehrere Reaktionsrohre in einer gemeinsamen Brennkammer angeordnet sind.

Damit entsprechende Rohrreaktoren "sowohl unter Verwendung von Verbrennungswärme als auch unter Verwendung von Elektrowärme " beheizt werden können, weisen diese nachfolgend noch erläuterte Mittel zur Erzeugung von sowohl Verbrennungs- als auch von Elektrowärme auf. Letztere können beispielsweise zur induktiven oder resistiven Erwärmung eingerichtet sein, bei ersteren handelt es sich insbesondere um direkt die Reaktionsrohre bezeizende Brenner für flüssige oder gasförmige Brennstoffe.

Ist hier davon die Rede, dass mehrere Rohrreaktoren "parallel angeordnet" sind, sei hierunter insbesondere verstanden, dass unter Verwendung dieser Rohrreaktoren jeweils bereitgestellte Gasgemische miteinander vereinigt werden. In "seriell" angeordneten Rohrreaktoren würde hingegen ein unter Verwendung eines der Rohrreaktoren bereitgestelltes Gasgemisch einem anderen der Rohrreaktoren zugeführt. Im Rahmen der vorliegenden Erfindung können, wie auch unten noch erläutert, seriell und parallel angeordnete Rohrreaktoren vorgesehen sein.

Es kann auch vorgesehen sein, parallel angeordneten Rohrreaktoren parallel identische Einsätze zuzuführen, die hierzu insbesondere von einer Hauptleitung ausgehend auf die parallel angeordneten Rohrreaktoren verteilt werden können. Eine parallele Anordnung schließt nicht aus, dass ein Volumenstrom durch einen der parallel angeordneten Rohrreaktoren deutlich von einem Volumenstrom durch einen anderen der parallel angeordneten Rohrreaktoren abweichen kann oder dass unterschiedliche Einsätze verwendet werden.

Die vorliegende Erfindung schlägt ein emissionsreduziertes Verfahren zur Herstellung von Olefinen durch Dampfspalten unter Verwendung eines oder mehrerer Rohrreaktoren vor. Mittels des oder der Rohrreaktoren wird ein bzw. jeweils ein Gasgemisch bereitgestellt. Erfindungsgemäß ist vorgesehen, dass der oder zumindest einer der Rohrreaktoren sowohl unter Verwendung von Verbrennungswärme, die durch Verfeuern wenigstens eines Brennstoffs erzeugt wird, als auch unter Verwendung von Elektrowärme, die mittels elektrischer Energie erzeugt wird, beheizt wird.

Durch das erfindungsgemäße Verfahren wird es möglich, "sauber" erzeugbare Elektrowärme einzusetzen und parallel dazu neuartige, insbesondere aber auch konventionelle Brennstoffe zu verfeuern. Die erfindungsgemäß vorgesehene kombinierte Beheizung, d.h. der Einsatz "hybrider" Rohrreaktoren ermöglicht eine besondere Flexibilität. Insbesondere kann vorgesehen sein, beispielsweise je nach Angebot an elektrischer Energie oder an Brennstoffen, die jeweils in Form von Verbrennungsenergie bzw. elektrischer Energie eingesetzten Energiemengen in gewissem Umfang gegeneinander zu verschieben. So kann beispielsweise in Zeiten geringeren Stromangebots eine größere Menge an Brennstoffen verfeuert, d.h. der Anteil an Verbrennungswärme erhöht werden. Gleichzeitig kann der Anteil der Elektrowärme in gleichem oder ähnlichem Umfang verringert werden. In entsprechender Weise kann beispielsweise in Zeiten geringeren Stromangebots der Anteil der Elektrowärme erhöht und der Anteil der Verbrennungswärme verringert werden. Eine entsprechende Verschiebung ist insbesondere beim Einsatz regenerativer, nicht grundlastfähiger elektrischer Energiequellen, beispielsweise Wind- oder Sonnenenergie, von Vorteil. Auch bei einer entsprechenden Verschiebung kann die Menge der mittels der Rohrreaktoren bereitgestellten Gasgemische konstant oder zumindest nahezu konstant gehalten werden.

Der soeben erläuterte Einsatz "hybrider" Rohrreaktoren und die soeben erläuterte Verschiebung des Energieeintrags zwischen Elektrowärme und Verbrennungswärme bei gleichbleibendem Gesamteintrag innerhalb eines Rohrreaktors schließt selbstverständlich nicht aus, dass in einem erfindungsgemäßen Verfahren bzw. einer entsprechenden Anlage zusätzlich ein oder mehrere weitere Rohrreaktoren bereitgestellt werden können, der oder die entweder nur unter Verwendung von Elektrowärme oder nur unter Verwendung von Verbrennungswärme beheizt werden können. Dieser oder diese können parallel und/oder seriell zueinander und/oder zu dem oder den "hybriden" Rohrreaktoren angeordnet sein, wie auch unten noch genauer erläutert.

Bei parallel angeordneten Rohrreaktoren kann auch, beispielsweise je nach Angebot an elektrischer Energie oder an Brennstoffen, wie erwähnt, eine entsprechende Verschiebung in der Menge der den parallel angeordneten Rohrreaktoren zugeführten Einsatzgemische erfolgen. Mit anderen Worten können dann, wenn ein großes Angebot an elektrischer Energie vorliegt, einem nur mittels Elektrowärme beheizten Rohrreaktor, falls vorhanden, größere Mengen eines Einsatzgemischs zugeführt werden, wobei gleichzeitig die Menge des Einsatzgemischs, das einem nur mittels Verbrennungswärme beheizten Rohrreaktor, falls vorhanden, zugeführt wird, entsprechend reduziert wird. Dabei kann je nach Bedarf eine Ab- oder Zuschaltung eines oder mehrerer Rohrreaktoren oder auch nur eines Teils der in den entsprechenden Rohrreaktoren vorhandenen Reaktionsrohre erfolgen. In sämtlichen Fällen kann jedoch die Menge der mittels der Rohrreaktoren bereitgestellten Gasgemische konstant oder zumindest nahezu konstant gehalten werden.

Im Rahmen der vorliegenden Erfindung ist es aus den soeben erläuterten Gründen besonders vorteilhaft, wenn dem oder zumindest einem der Rohrreaktoren, der oder die sowohl unter Verwendung von Verbrennungswärme als auch unter Verwendung von Elektrowärme beheizt wird oder werden, variable Mengen der Verbrennungswärme und/oder der Elektrowärme zugeführt werden. Eine variable Zuführung von Verbrennungswärme kann beispielsweise durch Einstellen einer Menge des zur Bereitstellung der Verbrennungswärme verbrannten Brennstoffs erfolgen, aber auch durch Zu- bzw. Abschalten von Brennern. Entsprechend kann eine variable Zuführung von Elektrowärme beispielsweise durch Einstellen der Menge der zur Bereitstellung der Elektrowärme eingesetzten elektrischen Energie erfolgen, aber auch durch Zu- bzw. Abschalten von beispielsweise resistiven oder induktiven Heizern.

Um eine Reduktion von Emissionen im Sinne der vorliegenden Erfindung zu erzielen, kann insbesondere vorgesehen sein, die zur Erzeugung der Elektrowärme verwendete Energie zumindest teilweise und/oder zumindest zeitweise regenerativ zu erzeugen. Im Rahmen der vorliegenden Erfindung kann durch den erläuterten flexiblen Betrieb der Rohrreaktoren beispielsweise auch vorgesehen sein, zu Zeiten, zu denen ein Stromüberschuss besteht, beispielsweise tagsüber oder bei Sonnenschein bei einer Photovoltaikanlage oder bei hohem Windaufkommen bei einer Windenergieanlage, in einem ersten Verfahrensmodus erhöhte Mengen an Elektrowärme einzusetzen. In diesen Zeiträumen können auch beispielsweise Brennstoffe, die wie unten erläutert unter Verwendung der vereinigten Gasgemische der mehreren Rohrreaktoren gebildet werden können, zwischengespeichert werden. Dies kann insbesondere im Sinne eines bekannten "Peak Shaving " in großem Umfang anfallend elektrische Energie sinnvoll verwertet werden.

Zu Zeiten, zu denen entsprechende Energieüberschüsse an elektrischer Energie nicht zur Verfügung stehen, kann die Menge der eingesetzten Elektrowärme reduziert werden und stattdessen auf entsprechende Brennstoffe zur Erzeugung von Verbrennungswärme zurückgegriffen werden. In diesem zweiten Betriebsmodus können auch die in dem ersten Betriebsmodus ggf. zwischengespeicherten Brennstoffe eingesetzt werden. Auf diese Weise ermöglicht das erfindungsgemäße Verfahren eine besonders vorteilhafte Anpassung an schwankende Angebote elektrischer Energie. Auch wenn in Zeiträumen geringeren Angebots an elektrischer Energie, d.h. in dem zweiten Verfahrensmodus, ggf. keine oder nur eine geringe Emissionsreduzierung erzielt wird, ergibt sich durch Nutzung der regenerativen elektrischen Energie insgesamt jedoch eine entsprechende Verringerung an Emissionen. Im Rahmen der vorliegenden Erfindung kann also (auch insbesondere konventionelle) Verbrennungswärme und elektrische Energie in unterschiedlichen Anteilen, je nach Verfügbarkeit und Preis, eingesetzt werden.

Im Rahmen der vorliegenden Erfindung ist es möglich, dass die dem oder zumindest einem der Rohrreaktoren zugeführte Verbrennungswärme durch Verbrennen eines methanreichen Gasgemischs erzeugt wird. Dieses methanreiche Gasgemisch kann von anlagenextern, beispielsweise in Form von Erdgas, oder von anlagenintern bereitgestellt werden. In beiden Fällen kann auf bekannte Brennerkonzepte zurückgegriffen werden, die zur Beheizung entsprechender Rohrreaktoren etabliert und daher besonders zuverlässig sind.

Insbesondere kann das methanreiche Gasgemisch unter Verwendung des oder der durch den oder die Rohrreaktoren bereitgestellten Gasgemische gebildet werden. Insbesondere kann ein entsprechendes Gasgemisch in einem Demethanizer bereitgestellt werden. Auf diese Weise kann zumindest teilweise oder zumindest zeitweise auf extern bereitgestellte Energie verzichtet werden.

Zur Fraktionierung des Spaltgases eines Dampfspaltverfahrens sind aus dem Stand der Technik unterschiedliche Fraktionierungsverfahren bekannt, die auch im Rahmen der vorliegenden Erfindung eingesetzt und zur Fraktionierung entsprechender Gasgemische werden können. Zu Details sei nochmals auf die eingangs erwähnte Fachliteratur verwiesen. Entsprechende Fraktionierungsverfahren unterscheiden sich unter anderem durch die Abfolge der Fraktionierungsschritte. Im Rahmen entsprechender Fraktionierungsverfahren werden aber typischerweise immer die erwähnten Demethanizer eingesetzt.

In einem Demethanizer wird aus einem Spaltgas bzw. einem aus dem Spaltgas gebildeten Gasgemisch eine leichte Fraktion abgetrennt, die einen niedrigeren Siedepunkt als Ethylen aufweisen, also insbesondere Wasserstoff und Methan. Es verbleibt eine schwerere Fraktion, die überwiegend oder ausschließlich Kohlenwasserstoffe mit zwei Kohlenstoffatomen sowie ggf. zuvor in dem Gasgemisch enthaltene Kohlenwasserstoffe mit höherem Siedepunkt enthält. Die leichte Fraktion kann, beispielsweise durch Kondensation auf geeigneten Temperaturen, in eine überwiegend oder ausschließlich Wasserstoff enthaltende Fraktion und in eine überwiegend oder ausschließlich Methan enthaltende Fraktion getrennt werden. Die Trennung kann jedoch auch ganz oder teilweise unterbleiben, so dass ein Gemisch aus im Wesentlichen Wasserstoff und Methan vorliegt. Dieses wird auch als sogenannte Heizgasfraktion bezeichnet.

Zur Fraktionierung des Spaltgases eines Dampfspaltverfahrens bzw. eines aus einem entsprechenden Spaltgas gebildeten Gasgemischs kann beispielsweise eine Demethanizer-First- oder Front-End-Demethanizer-Fraktionierung zum Einsatz kommen. Hierbei steht der Demethanizer an erster Stelle der Fraktionierung. Daher enthält das im Demethanizer bearbeitete Spaltgas bzw. das aus dem Spaltgas gebildete Gasgemisch neben den Kohlenwasserstoffen mit zwei Kohlenstoffatomen auch Kohlenwasserstoffe mit drei und mehr Kohlenstoffatomen. In einer Deethanizer-First- oder Frontend-Deethanizer-Fraktionierung werden hingegen Kohlenwasserstoffe mit drei und mehr, in einer Depropanizer-First- oder Frontend- Depropanizer-Fraktionierung Kohlenwasserstoffe mit vier und mehr Kohlenstoffatomen zuvor abgetrennt und gelangen daher nicht mehr in den Demethanizer.

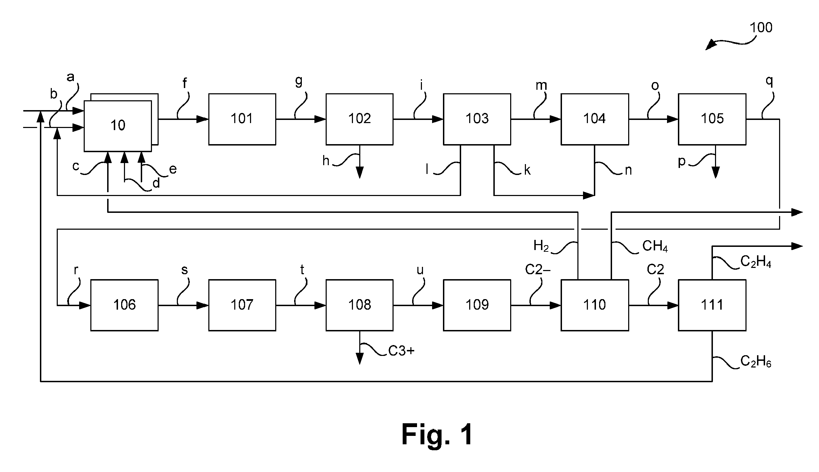

Ungeachtet der anschließenden Fraktionierung wird ein Spaltgas eines Dampfspaltverfahrens jedoch vor der Fraktionierung in geeigneter Weise aufbereitet. Details hierzu sind unter Bezugnahme auf die beigefügte Figur 1 veranschaulicht. Diese Aufbereitung umfasst insbesondere, da die Bearbeitung in einem Demethanizer eine Tieftemperaturtrennung vorsieht, insbesondere die Abtrennung von Kohlendioxid und die Trocknung des Produktgemischs. Ferner kann eine Entfernung von beispielsweise Kohlenmonoxid und anderer, nicht erwünschter Komponenten vorgenommen werden. Insbesondere werden schwere Kohlenwasserstoffe der Pyrolyseöl- und/oder Pyrolysebenzinfraktion stromauf des Demethanizers, Deethanizers oder Depropanizers in einer Primärfraktionierung abgetrennt.

Besonders vorteilhaft ist es, wenn die Verbrennungswärme durch Verbrennen eines wasserstoffreichen Gasgemischs erzeugt wird. Auf diese Weise lassen sich die Kohlendioxidemissionen eines entsprechenden Verfahrens besonders effizient reduzieren. Auch ein entsprechendes wasserstoffreiches Gasgemisch kann von anlagenextern oder von anlagenintern bereitgestellt werden. Insbesondere kann auch das wasserstoffreiche Gasgemisch unter Verwendung des oder der durch den oder die Rohrreaktoren bereitgestellten Gasgemische gebildet werden, beispielsweise ebenfalls in einem Demethanizer. Da in einem entsprechenden Demethanizer auch eine Wasserstoff und Methan enthaltende Fraktion (die erwähnte Heizgasfraktion) anfallen kann, kann auch diese genutzt werden. Durch den Wasserstoffanteil im Vergleich zu beispielsweise Erdgas verringern sich auch hier die Emissionen an Kohlendioxid.

Im Gegensatz zu herkömmlich betriebenen Rohrreaktoren zum Dampfspalten, in denen typischerweise eine Beheizung mit ca. 10% extern bereitgestelltem Brennstoff und ca. 90% einer rückgeführten Heizgasfraktion erfolgt, können durch die Verbrennung von Wasserstoff insbesondere die Kohlendioxidemissionen im Rahmen des Verfahrens gemäß der soeben erläuterten Ausführungsform deutlich reduziert werden. Selbst wenn die Wirtschaftlichkeit im Rahmen des erfindungsgemäßen Verfahrens möglicherweise unterhalb der Wirtschaftlichkeit herkömmlich betriebener Rohrreaktoren liegt, besteht der große Vorteil der vorliegenden Erfindung darin, dass die Emissionen drastisch reduziert sind. Durch den Einsatz von Wasserstoff anstelle von Kohlenwasserstoffen als Brennstoff können die bei der Beheizung des oder der entsprechenden Rohrreaktoren in herkömmlichen Verfahren durch die Verfeuerung von Kohlenwasserstoffen unvermeidlichen Emissionen auf null reduziert werden. Als Verbrennungsabgas des erfindungsgemäß vorgeschlagenen Verfahrens wird dann idealerweise lediglich Wasserdampf gebildet. In allen Fällen ist es möglich, beispielsweise um Minderangebote entsprechender Brennstoffe auszugleichen, auch weitere geeignete als die genannten Brennstoffe einzusetzen

Neben dem jeweiligen Brennstoff können dem oder den Brennern in einem oder mehreren auch oder ausschließlich mit Verbrennungswärme beheizten Rohrreaktoren auch ein oder mehrere Verbrennungsunterstützungsgase wie Luft oder Sauerstoff zugeführt werden. Beispielsweise kann durch die Verwendung von Sauerstoff oder sauerstoffangereicherter Luft als Verbrennungsunterstützungsgas die Stickstoffkonzentration bei der Verbrennung reduziert werden. Auf diese Weise kann auch die Emission von Stickoxiden gegenüber bekannten Verfahren, bei denen Verbrennungsluft eingesetzt wird, beträchtlich verringert werden.

Wie bereits erläutert, kann es gemäß der vorliegenden Erfindung insbesondere vorgesehen sein, mehrere Rohrreaktoren bereitzustellen und den mehreren Rohrreaktoren ein Einsatzgasgemisch zuzuführen, das auf die Rohrreaktoren verteilt wird. Wie erwähnt, kann dabei auch eine flexible Verteilung erfolgen, insbesondere um den entsprechenden Angeboten an Elektrowärme bzw. Verbrennungswärme gerecht zu werden.

Gemäß einer besonders bevorzugten Ausführungsform der vorliegenden Erfindung kann auch eine erweiterte parallele Anordnung von Rohrreaktoren vorgenommen werden. In diesem Fall sind zwei (oder mehr) Gruppen an parallel angeordneten Rohrreaktoren vorgesehen, wobei ein den parallel angeordneten Rohrreaktoren einer Gruppe entnommenes Gasgemisch den parallel angeordneten Rohrreaktoren einer anderen Gruppe zugeführt wird. Ein derartiges Verfahren, bzw. die Verwendung von parallel angeordneten Rohrreaktoren an sich, hat den besonderen Vorteil, dass Einsätze und Wärme gezielt auf diese verteilt werden können und gleichzeitig auch eine besonders vorteilhafte Vor- und Nachwärmung von entsprechenden Einsätzen vorgenommen werden kann.

Es kann also, mit anderen Worten, im Rahmen der vorliegenden Erfindung vorgesehen sein, dass mehrere Rohrreaktoren in mehreren Gruppen angeordnet sind, wobei die Anzahl von Rohrreaktoren derart gewählt ist, dass jede dieser mehreren Gruppen mehrere Rohrreaktoren umfasst, und wobei die Gasgemische, die jeweils unter Verwendung der Rohrreaktoren einer Gruppe bereitgestellt und vereinigt werden, den Rohrreaktoren einer anderen Gruppe zugeführt werden.

Auch in einer oder mehreren solcher Gruppen kann vorgesehen sein, die Beheizung unterschiedlicher Rohrreaktoren unterschiedlich zu gestalten. Hierbei ergeben sich die zuvor erwähnten Vorteile. Auch hier sind sämtliche Ausgestaltungsvarianten möglich, die oben unter Bezugnahme auf die parallele Anordnung grundsätzlich erläutert wurden. Auf die entsprechenden Vorteile wird dabei verwiesen.

Neben parallel angeordneten Rohrreaktoren können auch zusätzliche Rohrreaktoren vorgesehen sein, die seriell zu diesen parallel angeordneten Rohrreaktoren angeordnet sind. Beispielsweise kann wenigstens ein weiterer Rohrreaktor bereitgestellt sein, der mit den unter Verwendung der mehreren parallel angeordneten Rohrreaktoren bereitgestellten und vereinigten Gasgemischen gespeist wird. Dieser weitere Rohrreaktor kann ebenfalls mit Elektro- und/oder Verbrennungswärme beheizt werden, wie grundsätzlich zuvor erläutert. Durch eine entsprechende Anordnung ist es möglich, in den parallel angeordneten Rohrreaktoren einen Einsatz vorzuwärmen oder teilweise umzusetzen und den vorgewärmten bzw. teilweise umgesetzten Einsatz dann in dem oder den seriell angeordneten zusätzlichen Rohrreaktoren nachzuwärmen bzw. weiter umzusetzen.

Es kann alternativ oder zusätzlich auch wenigstens ein weiterer Rohrreaktor bereitgestellt werden, unter dessen Verwendung ein Gasgemisch bereitgestellt wird, das mehreren parallel angeordneten Rohrreaktoren zugeführt wird. Ein entsprechender, seriell vor den parallel angeordneten Rohrreaktoren angeordneter Rohrreaktor kann insbesondere zur Vorwärmung verwendet werden. Dieser weitere Rohrreaktor kann ebenfalls mit Elektro- und/oder Verbrennungswärme beheizt werden, wie grundsätzlich zuvor erläutert.

Weil im Rahmen der vorliegenden Erfindung teilweise ein Einsatz von Elektrowärme erfolgt, stehen nicht in dem Umfang heiße Verbrennungsgase zur Verfügung, wie dies in herkömmlichen betriebenen Rohrreaktoren der Fall ist. Daher steht auch für die Erzeugung von Dampf in der Konvektionszone entsprechender Rohrreaktoren, die eingangs erläutert wurde, eine geringere Energiemenge zur Verfügung. Daher kann es dazu kommen, dass im Rahmen des erfindungsgemäßen Verfahrens erzeugter Dampf nicht mehr für den Betrieb üblicherweise in einem entsprechenden Verfahren vorgesehenen Dampfturbinen ausreicht. Daher sieht ein Verfahren gemäß einer besonders bevorzugten Ausführungsform der vorliegenden Erfindung vor, das wenigstens eins mittels elektrischer Energie angetriebener Verdichter zum Einsatz kommt. Dieser Verdichter kann beispielsweise zur sogenannten Rohgasverdichtung eingesetzt werden, wie sie auch unter Bezugnahme auf die beigefügten Figuren erläutert ist. Auch hier kann zum Antrieb des oder der Verdichter regenerativ erzeugter elektrischer Energie eingesetzt werden.

Die vorliegende Erfindung bezieht sich auch auf eine Anlage zur Herstellung von Olefinen durch Dampfspalten, mit einem oder mehreren Rohrreaktoren, der oder die insbesondere dazu eingerichtet sind, ein oder jeweils ein Gasgemisch bereitzustellen. Erfindungsgemäß sind Mittel vorgesehen, die dafür eingerichtet sind, dem oder zumindest einem der Rohrreaktoren sowohl Verbrennungswärme, die durch Verfeuern wenigstens eines Brennstoffs erzeugt wird, als auch Elektrowärme, die mittels elektrischer Energie erzeugt wird, zuzuführen.

Wie erwähnt können die erläuterten Mittel, die dafür eingerichtet sind, dem oder zumindest einem der Rohrreaktoren Verbrennungswärme als auch Elektrowärme zuzuführen, einen oder mehrere Brenner und einen oder mehrere resistive und/oder induktive Heizer umfassen. Insbesondere weisen der oder die entsprechend beheizten Rohrreaktoren Reaktionsrohre auf, die sowohl mittels eines oder mehrerer Brenner als auch mittels eines oder mehrerer resistiver und/oder induktiver Heizer beheizbar sind. Entsprechende Reaktionsrohre können beispielsweise mit einer oder mehrereren resistiven und/oder induktiven Heizschlangen umwunden sein und zusätzlich von außen durch einen oder mehrere Brenner beheizt werden. Wie erwähnt, ist insbesondere vorgesehen, dass eine Menge der Verbrennungswärme und/oder der Elektrowärme einstellbar ist, um eine entsprechende Flexibilität zu gewährleisten.

Insbesondere kann in einem oder mehreren Reaktoren eine Einrichtung zum Einsatz kommen, wie sie in der WO 2015/197181 A1 offenbart ist, also eine Einrichtung zum Heizen eines Fluides mit zumindest einer elektrisch leitfähigen Rohrleitung zur Aufnahme des Fluides und zumindest einer mit der mindestens einen Rohrleitung verbundenen Spannungsquelle. Bei der Rohrleitung handelt es sich um ein mehrfach erwähntes Reaktionsrohr eines entsprechenden Rohrreaktors. In einer entsprechenden Einrichtung ist mindestens eine Spannungsquelle dazu ausgebildet, einen elektrischen Strom in der mindestens einen Rohrleitung zu erzeugen, der die mindestens eine Rohrleitung zum Heizen des Fluides erwärmt. Dabei ist vorgesehen, dass die mindestens eine Spannungsquelle M Außenleiter aufweist, wobei M eine natürliche Zahl größer oder gleich zwei ist, und dass die mindestens eine Spannungsquelle dazu ausgebildet ist, an den Außenleitern eine Wechselspannung bereitzustellen, wobei die Wechselspannungen gegeneinander um 2π/M phasenverschoben sind, und dass die Außenleiter so mit der mindestens einen Rohrleitung elektrisch leitend verbunden sind, dass eine Sternschaltung gebildet wird.

Eine derartige Anlage ist vorzugsweise zur Durchführung eines Verfahrens eingerichtet, wie es zuvor erläutert wurde, und weist hierzu entsprechend eingerichtete Mittel auf. Auf die entsprechende Merkmale und Vorteile des erfindungsgemäßen Verfahrens, die zuvor ausdrücklich erläutert wurden, sei daher ausdrücklich verwiesen.

Die vorliegende Erfindung wird anhand bevorzugter Ausführungsbeispiele in den beigefügten Zeichnungen näher erläutert.

Kurze Beschreibung der Zeichnung
Figur 1 zeigt ein Verfahren gemäß einer Ausführungsform der Erfindung.
Figuren 2A bis 2C zeigen in einem Verfahren gemäß einer Ausführungsform der Erfindung einsetzbare Rohrreaktoren und Reaktoranordnungen.

### Ausführliche Beschreibung der Zeichnung

In Figur 1 ist ein emissionsreduziertes Verfahren zur Herstellung von Olefinen gemäß einer Ausführungsform der vorliegenden Erfindung schematisch veranschaulicht und insgesamt mit 100 bezeichnet. Wird nachfolgend das Verfahren beschrieben, gelten die entsprechenden Erläuterungen für eine Anlage gemäß einer Ausführungsform der Erfindung in gleicher Weise.

Das in Figur 1 gezeigte Verfahren 100 umfasst eine Deethanizer-First-Fraktionierung eines Spaltgases. Wie mehrfach erläutert, eignet sich die vorliegende Erfindung aber in gleicher Weise für den Einsatz anderen Fraktionierungen, beispielsweise in einer Deethanizer- oder Depropanizer-First-Fraktionierung.

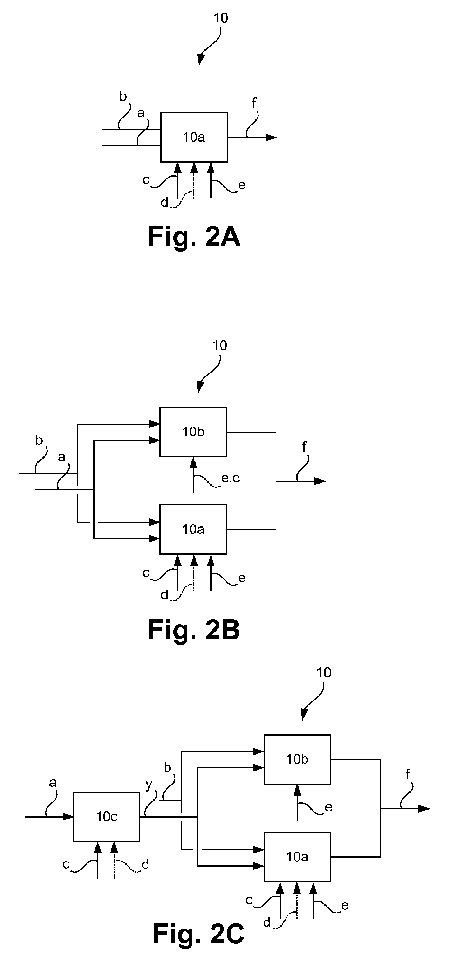

In dem Verfahren 100 werden einem oder mehreren Rohrreaktoren 10 bzw. dessen oder deren Reaktionsrohren ein oder mehrere Kohlenwasserstoffströme a und ein oder mehrere Dampfströme b zugeführt. Die Rohrreaktoren 10 können parallel und/oder seriell angeordnete Rohrreaktoren umfassen (nicht gezeigt). Auch eine Dampferzeugung erst in dem oder den Rohrreaktoren ist möglich. In dem oder den Rohrreaktoren 10, insbesondere deren Konvektionszone oder Konvektionszonen, können dabei der oder die Kohlenwasserstoffströme und der oder die Dampfströme vorgewärmt oder überhitzt werden. Auch eine Dampferzeugung ist möglich. Auch weitere Ströme, beispielsweise Verbrennungsluft, können entsprechend erwärmt werden. Details zu dem oder den im Rahmen der vorliegenden Erfindung einsetzbaren Rohrreaktoren 10 sind in den nachfolgenden Figuren 2A bis 2C veranschaulicht.

Gemäß der in Figur 1 veranschaulichten Ausführungsform der Erfindung wird wird der oder zumindest einer der Rohrreaktoren 10 sowohl unter Verwendung von Verbrennungswärme, die unter Verwendung eines oder mehrerer Brennstoffe erzeugt wird, als auch unter Verwendung von Elektrowärme, die unter Verwendung von elektrischer Energie erzeugt wird, beheizt. Beispielsweise kann vorgesehen sein, dass die Verbrennungswärme unter Verwendung eines oder mehrerer überwiegend oder ausschließlich Wasserstoff enthaltender Ströme c erzeugt wird, dessen oder deren Gewinnung nachfolgend noch ausführlich erläutert wird. Auch ein oder mehrere weitere Brennstoffströme oder beispielsweise im Prozess abgetrenntes Methan oder ein Heizgasstrom aus einem Demethanizer können alternativ oder zusätzlich zur Bereitstellung der Verbrennungswärme verwendet werden. Dies ist mit einem Strom d veranschaulicht. Elektrische Energie ist in Form eines Pfeils e veranschaulicht. Generell ist der Betrieb unterschiedlicher Rohrreaktoren 10 unter Verwendung unterschiedlicher Energiequellen möglich, wie oben erläutert.

In dem oder den Rohrreaktoren 10 wird ein Spaltgas erzeugt, das in Form eines Stroms f einer oder mehreren Quencheinrichtungen 101 zugeführt werden kann. Hierbei können eine Kühleinrichtung in Form eines Linearkühlers (Primärquench) und eine Ölsäule (Sekundärquench, Ölquench) verwendet werden. Das entsprechend abgekühlte Spaltgas kann in Form eines Stroms g in eine Primärfraktionierung überführt werden, wo Pyrolyseheizöl in Form eines Stroms h abgetrennt werden kann. Das entsprechend primärfraktionierte Spaltgas kann dann in Form eines Stroms i einer Wasserwäsche 103 zugeführt werden. In der Wasserwäsche 103 kann mittels Waschwasser Pyrolysebenzin in Form eines Stroms k aus dem Spaltgas abgetrennt werden. Bei der Wasserwäsche wird auch der noch vorhandene Prozessdampf kondensiert. Das dabei anfallende Wasser kann in Form eines Stroms I zu Prozessdampf umgesetzt werden, der zusammen mit dem Strom b in den oder die Rohrreaktoren 10 eingespeist werden kann. Wie erwähnt, kann auch erst in dem oder den Rohrreaktoren 10 bzw. dessen oder deren Konvektionszonen eine Dampferzeugung erfolgen.

Stromab der Wasserwäsche kann das Spaltgas in Form eines Stroms m in einer ersten Verdichtung 104 unterworfen werden, in der weiteres Pyrolysebenzin in Form eines Strom n anfallen kann. Der Strom n kann mit dem Strom k vereinigt werden. Das teilweise verdichtete Spaltgas kann anschließend einer Sauergasentfernung 105 unterworfen werden, in der beispielsweise Kohlendioxid in Form eines Stroms p abgetrennt werden kann. Das auf diese Weise bearbeitete Spaltgas kann nun in Form eines Stroms r einer weiteren Verdichtung 106 unterworfen werden. Nach einer entsprechenden Verdichtung kann das Spaltgas in Form eines Stroms s einer Trocknung und Kühlung 107 und anschließend in Form eines Stroms t einer Deethanisierung 108 unterworfen werden.

In der Deethanisierung 108 kann eine Fraktion gebildet werden, die überwiegend oder ausschließlich Kohlenwasserstoffe mit drei und mehr Kohlenstoffatomen enthält, also eine C3plus-Fraktion. Diese kann in Form eines entsprechenden Stroms, hier mit C3+ veranschaulicht, abgezogen werden. In der Deethanisierung kann ferner eine Fraktion gebildet werden, die überwiegend oder ausschließlich Wasserstoff, Methan und Kohlenwasserstoffe mit zwei Kohlenstoffatomen, darunter Ethan, Ethylen und Acetylen, enthält. Diese kann in Form eines entsprechenden Stroms, hier mit u bezeichnet, einer C2-Hydrierung 109 zugeführt werden. In der C2-Hydrierung 109 kann Acetylen zu Ethylen hydriert werden. Anstelle einer C2-Hydrierung kann auch beispielsweise eine sogenannte Frontend-Hydrierung eingesetzt werden. In der C2-Hydrierung wird ein Gasgemisch erhalten, das nun noch überwiegend oder ausschließlich Wasserstoff, Methan, Ethan und Ethylen enthält.

Dieses, auch als C2minus-Fraktion bezeichnete Gasgemisch kann in Form eines Stroms C2- einer Demethanisierung 110 zugeführt werden. In der Demethanisierung 110 kann ein überwiegend oder ausschließlich Wasserstoff enthaltender Strom H₂ und ein überwiegend oder ausschließlich Methan enthaltender Strom CH₄ gebildet werden. Es kann auch zunächst ein Strom gebildet werden, der Wasserstoff und Methan enthält, und der dann in den überwiegend oder ausschließlich Wasserstoff enthaltenden Strom H₂ und den überwiegend oder ausschließlich Methan enthaltenden Strom CH₄ aufgetrennt wird. Der überwiegend oder ausschließlich Wasserstoff enthaltende Strom H₂ kann gemäß der hier dargestellten Ausführungsform der Erfindung in Form des Stroms c dem oder zumindest einem der Rohrreaktoren 10 zur Beheizung verwendet werden. Der überwiegend oder ausschließlich Methan enthaltende Strom CH₄ kann grundsätzlich ebenfalls hierfür verwendet werden, beispielsweise alternativ oder zusätzlich zu dem Strom c als Strom d. Auch ein Wasserstoff und Methan enthaltender Strom aus der Demethanisierung kann als Strom d verwendet werden.

Die überwiegend oder vollständig von Wasserstoff und Methan befreite Fraktion, die nun noch überwiegend oder ausschließlich Ethan und Ethylen enthält, also eine C2-Fraktion, kann nun in Form eines Stroms C2 einem C2-Splitter 111 zugeführt und in diesem in eine Ethylen- und eine Ethanfraktion getrennt werden. Die Ethylenfraktion kann in Form eines Stroms C₂H₄ als Produkt ausgeführt werden, die Ethanfraktion kann in Form eines Stroms C₂H₆ in den oder die Rohrreaktoren 10 zurückgeführt und dort weiter umgesetzt werden.

Nicht veranschaulicht ist die weitere Behandlung des Stroms C3+. Beispielsweise können in einem entsprechenden Verfahren eine Depropanisierung, Debutanisierung, C3-Hydrierung und ein C3-Splitter vorgesehen sein.

In den Teilfiguren 2A bis 2C der Figur 2 ist ein Rohrreaktor bzw. sind Anordnungen mit jeweils mehreren Rohrreaktoren, die in einem Verfahren gemäß einer Ausführungsform der Erfindung, beispielsweise einem Verfahren 100 gemäß Figur 1, zum Einsatz kommen können, dargestellt. Der oder die Rohrreaktoren sind auch hier insgesamt mit 10 bezeichnet, Einzelreaktoren, insbesondere bei Vorhandensein mehrerer Rohrreaktoren 10, sind der Veranschaulichhung halber zusätzlich mit 10a bis 10c bezeichnet.

Wie in Teilfigur 2A veranschaulicht, werden einem Rohrreaktor 10a im Rahmen einer Ausführungsform der Erfindung ein Kohlenwasserstoffstrom a und ein Dampfstrom b zugeführt. Sind, wie gemäß Teilfigur 2B dargestellt, mehrere Rohrreaktoren 10a und 10b parallel angeordnet, können den diesen parallel angeordneten Rohrreaktoren 10a und 10b jeweils Anteile eines Kohlenwasserstoffstroms a und eines Dampfstroms b zugeführt werden. Es ist aber grundsätzlich auch möglich, Wasser und Dampf für parallel angeordnete Rohrreaktoren 10a und 10b nicht aus einer gemeinsamen Quelle bereitzustellen. Beispielsweise können den Rohrreaktoren 10a und 10b gemäß Teilfigur 2B unterschiedliche Kohlenwasserstoffeinsätze zugeführt werden, einem der Einsätze kann ein weiterer Kohlenwasserstoffstrom zugespeist werden, usw. Die Aufteilung ist beliebig. Unter Verwendung eines Rohrreaktors 10a gemäß Figur 2A wird ein bereits in Figur 1 gezeigter Strom f bereitgestellt. Die unter Verwendung der parallel angeordneten Rohrreaktoren 10a und 10b bereitgestellten Gasgemische, also das jeweilige Spaltgas, werden gemäß Figur 2B zu dem bereits in Figur 1 gezeigten Strom f vereinigt. Auch andere Konfigurationen sind möglich.

Wie in Teilfigur 2A veranschaulicht, wird im Rahmen einer Ausführungsform der Erfindung der Rohrreaktor 10a sowohl mittels Elektrowärme, wie in Figur 1 mit e veranschaulicht, als auch mit Verbrennungswärme beheizt. Die Verbrennungswärme wird dabei unter Verwendung des Stroms c und/oder des Stroms d bereitgestellt. Zu weiteren Erläuterungen sei auf Figur 1 verwiesen. Die Verbrennungswärme kann also unter Verwendung unterschiedlicher Brennstoffe bereitgestellt werden.

Gemäß Teilfigur 2B umfassen die parallel angeordneten Rohrreaktoren 10a und 10b einen Rohrreaktor 10a, der wie der in Teilfigur 2A gezeigte Rohrreaktor 10a sowohl mittels Elektrowärme e auch mit Verbrennungswärme c bzw. d beheizt wird. Ferner ist ein Rohrreaktor 10b dargestellt, der entweder nur mit Elektrowärme e oder nur mit Verbrennungswärme c (bzw. d) beheizt wird. Eine entsprechende parallele Anordnung kann jedoch auch zwei oder mehrere sowohl mittels Elektrowärme e auch mit Verbrennungswärme c bzw. d beheizte Rohrreaktoren umfassen. Den parallel angeordneten Rohrreaktoren 10a und 10b können auch ein weiterer Rohrreaktoren nach- oder vorgeschaltet sein. Auch eine mehrfach parallele Anordnung entsprechender Rohrreaktoren ist grundsätzlich möglich.

Gemäß Teilfigur 2C ist den mehreren parallel angeordneten Rohrreaktoren 10a und 10b ein weiterer Rohrreaktor 10c seriell vorgeschaltet, der im dargestellten Beispiel mit Verbrennungswärme beheizt wird, die dabei unter Verwendung des Stroms c und/oder des Stroms d bereitgestellt wird. Alternativ oder zusätzlich ist aber auch eine elektrische oder "hybride" Beheizung möglich. Die unter Verwendung der Rohrreaktoren 10a und 10b bereitgestellten Gasgemische werden zu dem Strom f vereinigt. Dem Rohrreaktor 10c kann der Kohlenwasserstoffstrom a zugeführt werden. Ferner kann dem Rohrreaktor 10c ein Dampfstrom zugeführt werden (nicht veranschaulicht). Der Rohrreaktor 10c kann zur Vorwärmung oder teilweisen Umsetzung der Kohlenwasserstoffe des Kohlenwasserstoffstroms a verwendet werden. Ein hierbei erhaltenes Gasgemisch kann in Form eines Stroms y den mehreren parallel angeordneten Rohrreaktoren 10a und 10b zugeführt werden.

Anstelle des einzelnen Rohrreaktors 10c der Teilfigur 2C können auch jeweils mehrere parallel angeordnet Rohrreaktoren vorgesehen sein. In dieser Ausgestaltung können mehrere repetitive Einheiten an Rohrreaktoren 10a und 10b in entsprechenden Gruppen seriell hintereinander angeordnet sein.

## Patentansprüche

1. Emissionsreduziertes Verfahren (100) zur Herstellung von Olefinen durch Dampfspalten unter Verwendung eines oder mehrerer Rohrreaktoren (10, 10a-10c), **dadurch gekennzeichnet, dass** der Rohrreaktor (10, 10a) oder zumindest einer der Rohrreaktoren (10, 10a-10c) sowohl unter Verwendung von Verbrennungswärme, die durch Verfeuern wenigstens eines Brennstoffs erzeugt wird, als auch unter Verwendung von Elektrowärme, die mittels elektrischer Energie erzeugt wird, beheizt wird.

2. Verfahren (100) nach Anspruch 1, wobei dem Rohrreaktor (10, 10a) oder zumindest einem der Rohrreaktoren (10, 10a), der oder die sowohl unter Verwendung der Verbrennungswärme als auch unter Verwendung der Elektrowärme beheizt wird oder werden, variable Mengen der Verbrennungswärme und/oder der Elektrowärme zugeführt werden.

3. Verfahren (100) nach Anspruch 1 oder 2, wobei wenigstens ein oder wenigstens ein weiterer Rohrreaktor (10, 10b, 10c) vorgesehen ist, der nur unter Verwendung von Verbrennungswärme oder Elektrowärme beheizt wird.

4. Verfahren (100) nach einem der vorstehenden Ansprüche, wobei die Verbrennungswärme zumindest teilweise durch Verbrennen eines methanreichen Gasgemischs erzeugt wird.

5. Verfahren (100) nach Anspruch 4, wobei das methanreiche Gasgemisch unter Verwendung eines oder mehrerer durch den oder die Rohrreaktoren (10, 10a-10c) bereitgestellter Gasgemische gebildet wird.

6. Verfahren (100) nach einem der vorstehenden Ansprüche, wobei die Verbrennungswärme zumindest teilweise durch Verbrennen eines wasserstoffreichen Gasgemischs erzeugt wird.

7. Verfahren (100) nach Anspruch 6, wobei das wasserstoffreiche Gasgemisch unter Verwendung eines oder mehrerer durch den oder die Rohrreaktoren (10, 10a-10c) bereitgestellter Gasgemische gebildet wird.

8. Verfahren (100) nach einem der vorstehenden Ansprüche, wobei mehrere seriell und/oder parallel angeordnete Rohrreaktoren (10, 10a-10c) vorgesehen sind.

9. Verfahren (100) nach einem der vorstehenden Ansprüche, wobei mehrere Rohrreaktoren (10, 10a-10c) in mehreren Gruppen vorgesehen sind, wobei die Anzahl von Rohrreaktoren (10, 10a-10c) derart gewählt ist, dass jede dieser Gruppen mehrere parallel angeordnete Rohrreaktoren (10, 10a-10c) umfasst.

10. Anlage zur Herstellung von Olefinen durch Dampfspalten mit einem oder mehreren Rohrreaktoren (10, 10a-10c), **dadurch gekennzeichnet, dass** Mittel vorgesehen sind, die dafür eingerichtet sind, dem Rohrreaktor (10, 10a-10c) oder zumindest einem der mehreren Rohrreaktoren (10, 10a-10c) sowohl Verbrennungswärme, die durch Verfeuern wenigstens eines Brennstoffs erzeugt wird, als auch Elektrowärme, die mittels elektrischer Energie erzeugt wird, zuzuführen.

11. Anlage nach Anspruch 10, wobei die Mittel, die dafür eingerichtet sind, dem oder zumindest einem der Rohrreaktoren (10, 10a-10c) sowohl die Verbrennungswärme als auch die Elektrowärme zuzuführen, einen oder mehrere zur Verbrennung eines Brennstoffs eingerichtete Brenner umfassen.

12. Anlage nach Anspruch 10 oder 11, wobei die Mittel, die dafür eingerichtet sind, dem oder zumindest einem der Rohrreaktoren (10, 10a-10c) sowohl die Verbrennungswärme als auch die Elektrowärme zuzuführen, eine oder mehrere induktive und/oder resistive elektrische Heizeinrichtungen umfassen.

13. Anlage nach einem der Ansprüche 10 bis 12, die zur Durchführung eines Verfahrens nach einem der Ansprüche 1 bis 9 eingerichtet ist.
